# EUROPEAN PATENT SPECIFICATION

(11) **EP 3 181 392 B1**
(45) Date of publication and mention of the grant of the patent: **14.04.2021**
(21) Application number: 16193579.6
(22) Date of filing: 12.10.2016
(51) Int. Cl.: B60K 17/34

(54) **COMPACT VEHICLE DRIVE TRAIN**
KOMPAKTER FAHRZEUGANTRIEBSSTRANG
TRANSMISSION DE VÉHICULE COMPACT

(30) Priority: 17.12.2015 GB 201522282
(43) Date of publication of application: 21.06.2017
(73) Proprietor: Countytrac Limited, Ashford, Kent TN23 1EW (GB)
(72) Inventor: MAY, Eric, Ashford, Kent TN23 1EW (GB); MATHER, John, Ashford, Kent TN23 1EW (GB)
(74) Representative: Haseltine Lake Kempner LLP

(56) References cited:
- CN-A- 104 797 451
- US-A- 4 650 028
- US-A- 4 690 238
- US-A- 4 744 435
- US-A1- 2005 087 380
- US-A1- 2007 093 347

## Description

The invention relates to a power transfer unit, for a drive train of a motor vehicle, and particularly, but not exclusively, relates to a drive train and power transfer unit comprising a compact configuration of a differential carrier and power transfer ring gear.

Motor vehicles are generally provided with either two-wheel drive or all-wheel drive (typically four-wheel drive). In a two-wheel drive configuration, drive is transmitted through the front axle and front two wheels or through the rear axle and rear two wheels. In some cases the motor vehicle may include a selectable four-wheel drive assembly in which the vehicle includes a permanent two-wheel drive configuration to one of the axles, with the option of connecting the driving power to the wheels of the other axle.

With modern motor vehicles having to carry ever more technology and associated equipment on board there is a need to make existing drive trains more compact so as to keep the vehicle total size and weight down.

It is known to adapt a front-wheel drive (FWD) vehicle to all-wheel drive (AWD) by the addition of a power transfer unit (PTU) connected to the front-wheel drive transmission; a driven rear axle; a prop shaft to connect the PTU to the rear axle; and transfer couplings to connect the front and rear axles together via the prop shaft.

In one arrangement, a differential of the front-wheel drive transmission is used to drive a separate external "bolt on" power transfer unit. With increasing complexity of vehicle systems, such as exhaust after treatment, emission controls, hybrid power trains, etc. packaging space for all-wheel drive components is at a premium. Therefore, a more compact power transfer unit (PTU) would be beneficial.

Document US 2005/087380 discloses a power transmission system and drive train for a vehicle and more particularly an all-wheel-drive (AWD) power transmission system which directly transmits drive power to both a first and second set of drive wheels of the vehicle via a continuously variable coupling accommodating the speed difference between the first and second set of drive wheels and also relating to an alternative power take off path from a transmission power transfer unit side shaft to power the rear drive train.

According to an aspect of the present invention there is provided a vehicle drive train comprising a transmission having a differential mounted in a transmission case, the differential having a differential carrier and a power transfer ring gear, the power transfer ring gear being mounted on or integrally formed with the differential carrier. The vehicle drive train further comprises a power transfer unit having a pinion gear rotatably mounted in the transmission case. The pinion gear meshes directly with the power transfer ring gear. The power transfer unit pinion gear is configured to rotate when driven by the power transfer ring gear.

According to another aspect of the present invention, there is provided a kit for transferring drive from a driven axle to another axle of a vehicle, the kit comprising a transmission having a differential mounted in a transmission case, the differential having a differential carrier and a power transfer ring gear, the power transfer ring gear being mounted on or integrally formed with the differential carrier.

The kit further comprises a power transfer unit having a pinion gear rotatably mounted in the transmission case. The pinion gear meshes directly with the power transfer ring gear. The power transfer unit pinion gear is configured to rotate when driven by the power transfer ring gear

The present invention provides a more compact vehicle drive train assembly including a configuration that minimises the space occupied by the existing components and in particular provides a differential and power transfer unit which allow for a more compact arrangement.

An arrangement having a power transfer ring gear mounted on, or integrally formed with, the differential carrier provides an advantage that the space occupied by the power transfer ring gear and the differential carrier may be reduced and this arrangement further reduces the space occupied by the power transfer unit by omitting the need for a separate drive component between the differential carrier and the power transfer ring gear. A further benefit of omitting additional drive components is that these components must transmit the large forces generated by a power unit (an internal combustion engine for example) to the driven wheels. Mounting the power transfer ring gear to the differential carrier means a reduction in the number of components through which the power must be transmitted and the close proximity of the teeth of the power transfer ring gear to the differential carrier means a reduction in the strain placed on the differential carrier bearings.

As mentioned above, the power transfer ring gear may be integral with the differential carrier. This arrangement provides a homogenous structure with consistent and predictable bulk mechanical properties. In such an embodiment, the teeth of the power transfer ring gear may be formed on the side of the differential carrier and, in use, are configured to mesh with the teeth of the power transfer pinion gear.

The power transfer ring gear may be mounted directly to, or be integrally formed with, a differential ring gear provided on the differential carrier. The differential ring gear may for example be a helical ring gear.

In an embodiment, the power transfer ring gear may be connected directly to the differential ring gear such that both gears are oriented in parallel. In this configuration the differential ring gear and the power transfer ring gear will have the same axis of rotation and be substantially next to each other, rotating in parallel planes.

In an embodiment, power is transmitted from a power unit through a transmission to the differential carrier and hence to the differential ring gear. The differential ring gear then drives the power transfer ring gear. The power transfer ring gear is positioned to mesh with a power transfer pinion gear, which may be mounted in the same transmission case as the differential carrier, the differential ring gear and the power transfer ring gear. The power transfer pinion gear is configured to rotate when driven by the power transfer ring gear. This rotation is transmitted to a prop shaft to which the power transfer pinion gear is attached. The prop shaft transmits drive to another axle of the vehicle.

The differential ring gear is connected directly to the power transfer ring gear such that the combined width of both gears does not exceed the sum of their individual widths. The positioning and dimensions of the gears is important in order to reduce the space occupied and increase the space available for other components around the vehicle drive train.

The diameter of the power transfer ring gear may be selected to produce a desired gear ratio between the power transfer ring gear and the power transfer pinion gear. Adjusting the ratio of the power transfer unit has the effect of reallocating the highest levels of torque, and changes where on the drive train the highest levels of torque are exerted. This maximises efficiency and keeps the torque loading within the mechanical limits of the components of the vehicle.

Optionally, the power transfer ring gear is a bevel ring gear. Providing a bevel ring gear as the power transfer ring gear has the advantage that the operating angle (of the power transfer pinion and prop shaft connection) may be optimised.

Optionally, the power transfer ring gear is a hypoid ring gear. Providing a hypoid ring gear (hypoid-type bevel ring gear) as the power transfer ring gear has the advantage that the pinion positioning can be offset above or below the gear centre line. This allows for a larger pinion diameter. Such an arrangement may contribute to longer life and smoother meshing of the power transfer ring gear and the power transfer pinion gear, and may also provide adjustment of the relative gear positions to overcome packaging restrictions.

In the above description, the differential carrier is described as located at the front end of the vehicle (i.e., in a front axle). However, the differential carrier may be located in or at any axle of the vehicle and may transfer power from that axle to another axle.

Optionally, the vehicle drive train may be embodied as part of a system or as a kit which is installable in a vehicle configured for front-wheel drive or rear-wheel drive, so as to convert the vehicle into four-wheel drive, for example.

Optionally, the vehicle into which the vehicle drive train assembly is integrated may be a van or other commercial vehicle. Commercial vehicles are of particular interest as they are generally mass-produced to a standardised specification. A significant number then go on to be modified for specific tasks depending on their commercial function. An embodiment of the present invention may be implemented in the case where a two-wheel drive van is to be modified to have permanent or selectable four-wheel drive.

As mentioned above, a compact power transfer unit may be constructed by mounting the power transfer ring gear directly to the differential ring gear. For example, the differential carrier may include a radial flange. This radial flange could support a helical differential ring gear on one side, and a power transfer ring gear on the other side with the use of appropriate fastening means. The power transfer ring gear could also be mounted on the differential carrier separately from the differential ring gear, subject to the specific application requirements. In one embodiment, the power transfer ring gear drives a mating power transfer pinion gear suitably mounted in a front-wheel drive transmission case with the appropriate support bearings, oil seal and a prop shaft drive flange. For example, the power transfer pinion gear may be mounted in the differential carrier portion of the transmission case. By the described embodiments, the power transfer unit may be integrated into the transmission (gear box) rather than requiring a separate bolt-on unit.

Advantages associated with the configuration of the present invention include minimising packaging space, by the simplified arrangement, minimising parasitic loss, through a reduction of the number of drive connections/links between components, and minimising heat generation, through the reduction in the number of components. A further advantage of integrating the PTU into the transmission is that there is no separate PTU oil reservoir required, as any lubrication fluid used for the transmission may be shared with the PTU.

The invention is described, by way of example only, with reference to the following figures in which:
Figure 1 is a view from above of a vehicle drive train assembly;
Figure 2 is a cut away view of a front axle and PTU assembly;
Figure 3 is a cut away view of a front axle and PTU assembly, including a transmission case and output shaft;
Figure 4 is a cross section through a differential and power transfer unit.

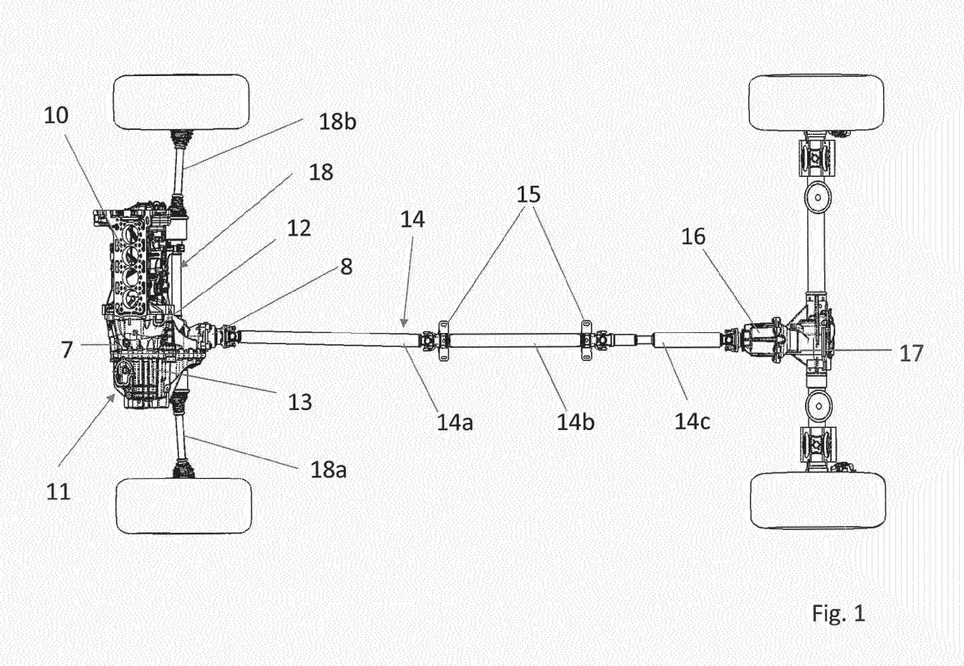

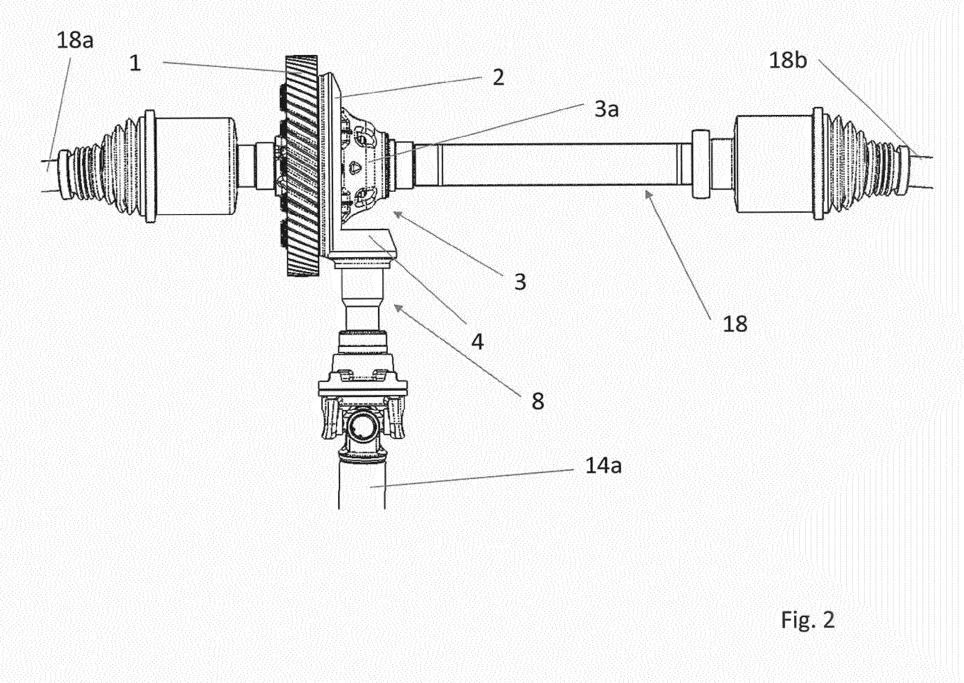

Figure 1 is a view from above of a vehicle drive train assembly. Figure 1 shows a power unit (engine) 10 connected to a manual transmission 11. The transmission 11 includes a transmission case 7 which may include a differential case 12 and a gear case 13, which may be bolted together. The transmission 11 connects to a differential 3 (shown in Figure 2) housed within the transmission case 7. The differential 3 is connected to a power transfer unit 8. The differential 3 and power transfer unit 8 will be described in more detail below.

The power transfer unit 8 is connected via a universal joint to a drive shaft 14. The drive shaft 14 may include a front drive shaft 14a, a centre draft shaft 14b and a rear drive shaft 14c. The drive shaft 14 may further include one or more support bearings 15. The drive shaft 14 is connected to a coupling 16 at the rear axle. Specifically, in the embodiment shown, the coupling 16 is an intelligent lockable multi-plate clutch coupling. Such a coupling may selectively engage and disengage drive to the rear axle. The coupling 16 is connected to a rear differential 17 to provide drive to the rear wheels. In the embodiment shown, the power transfer unit 8 is located at the front axle and the differential 17 is located at the rear axle. However, it should be understood that in a rear engine vehicle, for example, the power transfer unit 8 may be located at the rear axle and the differential 17 at the front axle.

Figure 2 shows an embodiment of the invention with the transmission case 7 removed in order to allow clearer depiction of the internal components. Figure 2 shows a front axle 18 including a left drive shaft 18a and a right drive shaft 18b. The left drive shaft 18a and the right drive shaft 18b are connected on either side of a front differential 3. The differential 3 includes a differential carrier 3a and a differential ring gear 1. The differential carrier 3a is connected to a power transfer ring gear 2. The power transfer ring gear 2 is positioned to mesh with a pinion gear 4 of a power transfer unit 8. As shown, with this configuration, the components associated with transferring power from a first axle to a second axle occupy a relatively small amount of space and, in particular, the power transfer ring gear 2 is configured to be driven off the differential carrier 3a rather than requiring a separate coupling between the differential carrier 3a and the power transfer ring gear 2. In an embodiment, the power transfer ring gear 2 may be connected to the differential ring gear 1. For example, the power transfer ring gear 2 may be integrally formed with the differential ring gear 1 or the gears may simply be bolted together.

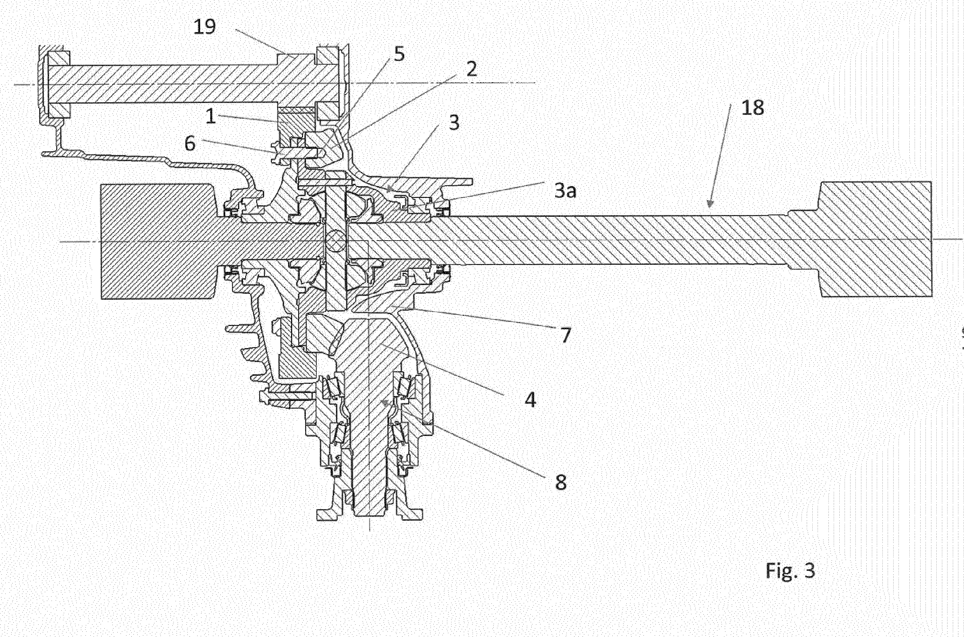

Figure 3 shows an embodiment of the invention including the transmission case 7, a transmission output gear 19 and an example of the connection between the differential ring gear 1 and the power transfer ring gear 2, which in this case includes bolts 6 for bolting the components together. The transmission output gear 19 is arranged to mesh with the differential ring gear 1.

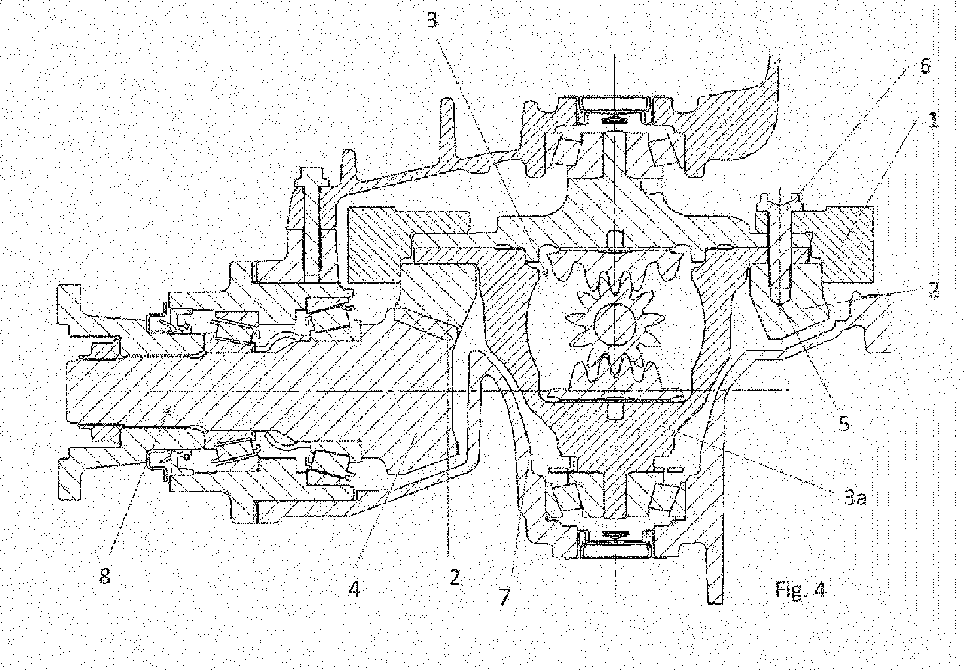

Figure 4 shows a cross-section of an embodiment of the vehicle drive train assembly. As shown in Figure 4, the front-wheel drive helical differential ring gear 1 surrounds the other elements of the differential 3. The power transfer ring gear 2 is mounted onto the differential carrier 3a by means of the bolts 6 which pass through the differential ring gear 1, through holes in the differential carrier 3a and are screwed into threaded blind bores 5 formed in the power transfer ring gear 2. Thus, in the embodiment shown, power transfer ring gear 2 and differential ring gear 1 are bolted directly together, with the radial flange of the differential carrier 3a clamped between them.

The power transfer ring gear 2 is positioned so as to mesh with a power transfer pinion gear 4 of the power transfer unit 8. The power transfer pinion gear 4 is mounted at one end in bearings within the transmission case 7. The other end of the power transfer pinion gear 4 is configured to be connected to a drive shaft to transfer power from the front-wheel drive transmission to the rear axle.

The diameter of the power transfer ring gear 2 and the diameter of the transfer pinion gear 4 may be adjusted to achieve the desired drive ratio. As can be seen from figure 2 the driving power is transmitted through the front-wheel drive differential carrier 3a directly to the power transfer ring gear 2, and is then transmitted to the power transfer pinion gear 4 which meshes with the power transfer ring gear 2. With this configuration, the cross-sectional width of the front-wheel drive differential ring gear 1 and the power transfer ring gear 2 can be kept to a minimum in that there is no further connection or additional component between the two gears. The power transfer ring gear 2 may be a bevel or hypoid type ring gear. The power transfer ring gear 2 may be bolted to the differential carrier 3a or differential ring gear 1, integrally formed with the differential carrier 3a or differential ring gear 1 at the manufacturing stage, or attached to the differential carrier 3a or differential ring gear 1 by any other suitable fastening means.

The differential ring gear 1 and the power transfer ring gear 2 are disposed in parallel and are arranged to occupy a smaller area than conventional power transfer units.

The present invention may be used to adapt existing two-wheel drive vehicles to all-wheel drive. Such an adaptation involves various constraints which may not necessarily occur with a vehicle that was always intended to have four-wheel drive. For example, a power transfer unit, to transfer the driving power from one driven axle to another axle, will not be necessary in a two-wheel drive vehicle. Therefore the space around the driven axle in a two-wheel drive vehicle will generally be occupied by other components of the vehicle. As such, it is important that any elements involved in the adaptation to four-wheel drive occupy as little space in the vehicle as possible. For example, it would be unfeasible to replace the two-wheel drive system with a conventional four-wheel drive system. Such a replacement would involve significant alteration to the configuration and layout of the vehicle. To minimise the adaptations required to other elements of the vehicle, power transfer and drive train assemblies must occupy the smallest volume possible and preferably be kept within the confines of the original two-wheel drive system. Therefore, in the context of the present invention minimising the width of the combined differential ring gear and power transfer ring gear causes minimal extension of the area occupied by the existing transmission and differential.

Furthermore, rather than requiring a separate bolt on power transfer unit, as would conventionally be the case, the power transfer unit is integrated into the transmission case and meshes directly with the differential carrier or differential ring gear inside the transmission case. This reduces the number of components required to adapt a two-wheel drive vehicle to four-wheel drive. The benefits of not having to provide a separate casing and oil supply for the power transfer unit far outweigh the minor increase in complexity of the transmission case 7.

## Claims

1. A vehicle drive train comprising a transmission (11) having a differential (3) mounted in a transmission case (7), the differential having a differential carrier (3a) and a power transfer ring gear (2), the differential carrier being provided with a differential ring gear (1) and the power transfer ring gear being mounted directly to, or being integrally formed with, the differential ring gear, the vehicle drive train further comprising a power transfer unit (8) having a pinion gear (4) which is rotatably mounted in the same transmission case (7) as the differential (3) and meshes directly with the power transfer ring gear (2), wherein the power transfer unit pinion gear is configured to rotate when driven by the power transfer ring gear **characterised in that**, the differential ring gear (1) is connected directly to the power transfer ring gear (2) such that the combined width of both gears does not exceed the sum of their individual widths.

2. The vehicle drive train according to claim 1, wherein the power transfer ring gear (2) is integral with the differential carrier (3a) and comprises gear teeth formed on the side of the differential carrier.

3. The vehicle drive train according to claim 3, wherein the differential ring gear (1) is a helical ring gear.

4. The vehicle drive train according to claim 3 or claim 4, wherein the differential ring gear (1) is connected directly to the power transfer ring gear (2) such that both gears are oriented in parallel.

5. The vehicle drive train according to any preceding claim, wherein a diameter of the power transfer ring gear (2) is selected to produce a desired gear ratio between the power transfer ring gear and the power transfer pinion gear (4).

6. The vehicle drive train according to any preceding claim, wherein the power transfer ring gear (2) is a bevel ring gear.

7. The vehicle drive train according to any preceding claim, wherein the power transfer ring gear (2) is a hypoid ring gear.

8. The vehicle drive train according to any preceding claim, wherein the differential (3) is a front differential.

9. A motor vehicle comprising the vehicle drive train according to any preceding claim.

10. The motor vehicle according to claim 9, wherein the motor vehicle is a commercial vehicle.

11. A method of converting a two wheel drive vehicle to four wheel drive, the method comprising replacing the transmission and differential of the two wheel drive vehicle with a vehicle drive train as claimed in any preceding claim;
replacing a non-driven axle of the two wheel drive vehicle with a driven axle; and connecting the power transfer unit (8) to the driven axle using a drive shaft (14).

12. A kit for transferring drive from a driven axle to another axle of a vehicle, the kit comprising a transmission (11) having a differential (3) mounted in a transmission case (7), the differential having a differential carrier (3a) and a power transfer ring gear (2), the differential carrier being provided with a differential ring gear (1) and the power transfer ring gear being mounted directly to, or being integrally formed with, the differential ring gear, the kit further comprising a power transfer unit (8) having a pinion gear (4) which is rotatably mounted in the transmission case and meshes directly with the power transfer ring gear, wherein the power transfer unit pinion gear is configured to rotate when driven by the power transfer ring gear, **characterised in that** the differential ring gear (1) is connected directly to the power transfer ring gear (2) such that the combined width of both gears does not exceed the sum of their individual widths.

13. The kit of claim 12, wherein the power transfer ring gear (2) is integral with the differential carrier (3a) and comprises gear teeth formed on the side of the differential carrier.

## Patentansprüche

1. Fahrzeugantriebsstrang, umfassend ein Getriebe (11), das ein Differential (3) aufweist, das in einem Getriebegehäuse (7) montiert ist, wobei das Differential einen Differentialträger (3a) und ein Kraftübertragungszahnkranz (2) aufweist, wobei der Differentialträger mit einem Differentialzahnkranz (1) versehen ist und der Kraftübertragungszahnkranz direkt an dem Differentialzahnkranz montiert oder einstückig mit diesem ausgebildet ist, der Fahrzeugantriebsstrang ferner umfassend eine Kraftübertragungseinheit (8), das ein Ritzel (4) aufweist, das drehbar in demselben Getriebegehäuse (7) wie das Differential (3) montiert ist und direkt mit dem Kraftübertragungszahnkranz (2) eingreift, wobei das Ritzel der Kraftübertragungseinheit konfiguriert ist, um zu drehen, wenn es von dem Kraftübertragungszahnkranz angetrieben wird, **dadurch gekennzeichnet, dass** der Differentialzahnkranz (1) direkt mit dem Kraftübertragungszahnkranz (2) verbunden ist, sodass die kombinierte Breite beider Zahnräder die Summe ihrer individuellen Breiten nicht überschreitet.

2. Fahrzeugantriebsstrang gemäß Anspruch 1, wobei der Kraftübertragungszahnkranz (2) einstückig mit dem Differentialträger (3a) ist und eine Verzahnung umfasst, die auf der Seite des Differentialträgers gebildet ist.

3. Fahrzeugantriebsstrang gemäß Anspruch 3, wobei der Differentialzahnkranz (1) ein schrägverzahnter Zahnkranz ist.

4. Fahrzeugantriebsstrang gemäß Anspruch 3 oder Anspruch 4, wobei der Differentialzahnkranz (1) direkt mit dem Kraftübertragungszahnkranz (2) verbunden ist, sodass beide Zahnräder parallel ausgerichtet sind.

5. Fahrzeugantriebsstrang gemäß einem der vorherigen Ansprüche, wobei ein Durchmesser des Leistungsübertragungszahnkranzes (2) gewählt ist, um ein gewünschtes Übersetzungsverhältnis zwischen dem Kraftübertragungszahnkranz und dem Kraftübertragungsritzel (4) zu erzeugen.

6. Fahrzeugantriebsstrang gemäß einem der vorherigen Ansprüche, wobei der Kraftübertragungszahnkranz (2) ein Kegelzahnkranz ist.

7. Fahrzeugantriebsstrang gemäß einem der vorherigen Ansprüche, wobei der Kraftübertragungszahnkranz (2) ein Hypoidzahnkranz ist.

8. Fahrzeugantriebsstrang gemäß einem der vorherigen Ansprüche, wobei das Differential (3) ein vorderes Differential ist.

9. Kraftfahrzeug, umfassend den Fahrzeugantriebsstrang gemäß einem der vorherigen Ansprüche.

10. Kraftfahrzeug gemäß Anspruch 9, wobei das Kraftfahrzeug ein Nutzfahrzeug ist.

11. Verfahren zum Umwandeln eines Zweiradantrieb-Fahrzeugs auf Vierradantrieb, das Verfahren umfassend ein Ersetzen des Getriebes und des Differentials des Zweiradantrieb-Fahrzeugs durch einen Fahrzeugantriebsstrang gemäß einem der vorherigen Ansprüche;
Ersetzen einer nicht angetriebenen Achse des Zweiradantrieb-Fahrzeugs durch eine angetriebene Achse; und
Verbinden der Kraftübertragungseinheit (8) mit der angetriebenen Achse unter Verwendung einer Antriebswelle (14).

12. Kit zum Übertragen von Antrieb von einer angetriebenen Achse auf eine andere Achse eines Fahrzeugs, das Kit umfassend ein Getriebe (11), das ein Differential (3) aufweist, das in einem Getriebegehäuse (7) montiert ist, wobei das Differential einen Differentialträger (3a) und ein Kraftübertragungszahnkranz (2) aufweist, wobei der Differentialträger mit einem Differentialzahnkranz (1) versehen ist und der Kraftübertragungszahnkranz direkt an dem Differentialzahnkranz montiert oder einstückig mit diesem ausgebildet ist, das Kit ferner umfassend eine Kraftübertragungseinheit (8), die ein Ritzel (4) aufweist, das drehbar in dem Getriebegehäuse montiert ist und direkt mit dem Kraftübertragungszahnkranz eingreift, wobei das Ritzel der Kraftübertragungseinheit konfiguriert ist, um zu drehen, wenn es von dem Kraftübertragungszahnkranz angetrieben wird, **dadurch gekennzeichnet, dass** der Differentialzahnkranz (1) direkt mit dem Kraftübertragungszahnkranz (1) verbunden ist, sodass die kombinierte Breite beider Zahnräder die Summe ihrer individuellen Breiten nicht überschreitet.

13. Kit gemäß Anspruch 12, wobei der Kraftübertragungszahnkranz (2) einstückig mit dem Differentialträger (3a) ist und eine Verzahnung umfasst, die auf der Seite des Differentialträgers gebildet ist.

## Revendications

1. Une chaîne de transmission de véhicule comprenant une transmission (11) ayant un différentiel (3) monté dans un carter de transmission (7), le différentiel ayant un support de différentiel (3a) et une couronne dentée de transfert de puissance (2), le support de différentiel étant pourvu d'une couronne dentée de différentiel (1) et la couronne dentée de transfert de puissance étant montée directement sur, ou étant intégralement formée avec la couronne dentée de différentiel, la chaîne de transmission de véhicule comprenant en outre une unité de transfert de puissance (8) ayant un engrenage à pignons (4) qui est monté de manière rotative dans le même carter de transmission (7) en tant que différentiel (3) et s'engrène directement avec la couronne dentée de transfert de puissance (2), dans laquelle l'engrenage à pignons de l'unité de transfert de puissance est configuré pour tourner lorsqu'il est entraîné par la couronne dentée de transfert de puissance **caractérisé en ce que**, la couronne dentée de différentiel (1) est connectée directement à la couronne dentée de transfert de puissance (2), de telle sorte que la largeur combinée des deux engrenages ne dépasse pas la somme de leurs largeurs individuelles.

2. La chaîne de transmission de véhicule selon la revendication 1, dans laquelle la couronne dentée de transfert de puissance (2) est intégrale avec le support de différentiel (3a) et comprend des dents d'engrenage formées sur le côté du support de différentiel.

3. La chaîne de transmission de véhicule selon la revendication 3, dans laquelle la couronne dentée de différentiel (1) est une couronne dentée hélicoïdale.

4. La chaîne de transmission de véhicule selon la revendication 3 ou la revendication 4, dans laquelle la couronne dentée de différentiel (1) est connectée directement à la couronne dentée de transfert de puissance (2), de telle sorte que les deux engrenages sont orientés de manière parallèle.

5. La chaîne de transmission de véhicule selon l'une quelconque des revendications précédentes, dans laquelle un diamètre de la couronne dentée de transfert de puissance (2) est sélectionné pour produire un ratio d'engrenage désiré entre la couronne dentée de transfert de puissance et l'engrenage à pignons de transfert de puissance (4).

6. La chaîne de transmission de véhicule selon l'une quelconque des revendications précédentes, dans laquelle la couronne dentée de transfert de puissance (2) est une couronne dentée conique.

7. La chaîne de transmission de véhicule selon l'une quelconque des revendications précédentes, dans laquelle la couronne dentée de transfert de puissance (2) est une couronne dentée hypoïde.

8. La chaîne de transmission de véhicule selon l'une quelconque des revendications précédentes, dans laquelle le différentiel (3) est un différentiel avant.

9. Un véhicule à moteur comprenant la chaîne de transmission de véhicule selon l'une quelconque des revendications précédentes.

10. Le véhicule à moteur selon la revendication 9, dans lequel le véhicule à moteur est un véhicule commercial.

11. Un procédé pour convertir un véhicule à deux roues motrices en véhicule à quatre roues motrices, le procédé comprenant le remplacement de la transmission et du différentiel du véhicule à deux roues motrices avec une chaîne de transmission de véhicule selon l'une quelconque des revendications précédentes ;
le remplacement d'un essieu non moteur du véhicule à deux roues motrices avec un essieu moteur ; et
la connexion de l'unité de transfert de puissance (8) à l'essieu moteur en utilisant un arbre d'entraînement (14).

12. Un kit pour transférer l'entraînement d'un essieu moteur à un autre essieu du véhicule, le kit comprenant une transmission (11) ayant un différentiel (3) monté dans un carter de transmission (7), le différentiel ayant un support de différentiel (3a) et une couronne dentée de transfert de puissance (2), le support de différentiel étant pourvu d'une couronne dentée de différentiel (1) et la couronne dentée de transfert de puissance étant montée directement sur, ou étant intégralement formée avec la couronne dentée de différentiel, le kit comprenant en outre une unité de transfert de puissance (8) ayant un engrenage à pignons (4) qui est monté de manière rotative dans le carter de transmission et s'engrène directement avec la couronne dentée de transfert de puissance, dans lequel l'engrenage à pignons de l'unité de transfert de puissance est configuré pour tourner lorsqu'il est entraîné par la couronne dentée de transfert de puissance, **caractérisé en ce que** la couronne dentée de différentiel (1) est connectée directement à la couronne dentée de transfert de puissance (2), de telle sorte que la largeur combinée des deux engrenages ne dépasse pas la somme de leurs largeurs individuelles.

13. Le kit selon la revendication 12, dans lequel la couronne dentée de transfert de puissance (2) est solidaire du support de différentiel (3a) et comprend des dents d'engrenage formées sur le côté du support de différentiel.
